Europäisches Patentamt

**European Patent Office**

Office européen des brevets

(11) Veröffentlichungsnummer: **0 075 964**
**B1**

(12) **EUROPÄISCHE PATENTSCHRIFT**

(45) Veröffentlichungstag der Patentschrift:
05.08.87

(51) Int. Cl.⁴: **H 01 S 3/082, H 01 S 3/23**

(21) Anmeldenummer: **82110385.0**

(22) Anmeldetag: **24.01.81**

(60) Veröffentlichungsnummer der früheren Anmeldung
nach Art. 76 EPÜ: **0048716**

(54) **Laseranordnung.**

(30) Priorität: **05.04.80 DE 3013300**
**05.04.80 DE 3013301**

(43) Veröffentlichungstag der Anmeldung:
**06.04.83 Patentblatt 83/14**

(45) Bekanntmachung des Hinweises auf die Patenterteilung:
**05.08.87 Patentblatt 87/32**

(84) Benannte Vertragsstaaten:
**FR GB NL SE**

(56) Entgegenhaltungen:
**EP - A - 0 001 032**
**EP - A - 0 011 679**
**US - A - 3 753 147**

**APPLIED PHYSICS LETTERS, Band 30, Nr. 3, 1. Februar
1977, Seiten 164-166, American Institute of Physics,
New York, US; I.V. TOMOV u.a.: "Generation of single
synchronizable picosecond 1.06-mum pulses"**

(73) Patentinhaber: **ELTRO GmbH Gesellschaft für
Strahlungstechnik, Kurpfalzring 106 Postfach 10 21 20,
D-6900 Heidelberg 1 (DE)**

(72) Erfinder: **Vierling, Karl-Heinz, Carl-Maria-von Weber
Strasse 8, D-6901 Bammental (DE)**
Erfinder: **Prein, Franz, Tulpenweg 3,
D-6901 Waldhilsbach (DE)**
Erfinder: **Karning, Heinrich, Albert-Fritz-Strasse 6,
D-6900 Heidelberg (DE)**

(74) Vertreter: **Muschka, Wilhelm, Dipl.-Ing., Eltro GmbH
Gesellschaft für Strahlungstechnik
Kurpfalzring 106 Postfach 10 21 20,
D-6900 Heidelberg 1 (DE)**

## Beschreibung

Die Erfindung betrifft eine Laseranordnung, bestehend aus einem von einem Gehäuse umgebenen Resonatorraum mit einem Elektrodensystem, das in eine Mittelelektrode mit zwei der elektrischen Entladung dienende Oberflächen und zwei diesen Flächen gegenüberliegende Aussenelektroden aufgegliedert ist, wobei durch die Elektrodenanordnung zwei Resonatorachsen definiert werden und wobei vier optische Elemente vorgesehen sind, von denen wenigstens eines teildurchlässig ist, die an den Gehäusestirnseiten in Höhe der Freiräume zwischen den Elektroden den Laserstrahl in Richtung auf die jeweils andere Resonatorachse umlenken oder den Laserstrahl auskoppeln, wobei die umlenkenden optischen Elemente unter einem Winkel zum Strahlenverlauf angeordnet sind.

Eine solche Laseranordnung ist z.B. Gegenstand der DE-OS 2 753 304, während in «Applied Physics Letters», Vol. 24, No. 7, vom 1. April 1974, Seiten 306/7, und in dem Fachaufsatz «Generation of bandwidth-limited pulses from a TEA $CO_2$ laser using p-type germanium» von A.F. Gibson, M.F. Kimmitt und B. Norris, ein Oszillator-Laser-Verstärker behandelt wird.

Die Aufgabe der Erfindung besteht in der Schaffung einer Möglichkeit, bei einem wenigstens zwei für sich existente Kanäle enthaltenden Laser die Form des Laserimpulses beeinflussen zu können. Diese Aufgabe wird erfindungsgemäss dadurch gelöst, dass die von den Elektrodenpaaren gebildeten Kanäle über den aus dem einen Kanal ausgekoppelten und in den anderen Kanal eingekoppelten Laserstrahl in Reihe geschaltet sind und in diesen Strahlengang des Lasers mindestens ein die Pulsformung zeitlich und/oder geometrisch beeinflussendes Element geschaltet ist. Dadurch wird es möglich, die Strahlaufbereitung in einfacher Weise zu beeinflussen, so dass hinter diesem zweiten Kanal ein in gewünschter Weise geformter Laserimpuls entsteht.

Was die praktische Anwendung anbetrifft, ist es hierbei sinnvoll, wenn der erste Kanal einen optisch abgeschlossenen Laser-Oszillator mit einem (instabilen) Resonator aufweist und der mit ihm in Reihe geschaltete weitere Entladungskanal einen Laser-Verstärker mit einem Injektionslaser darstellt. Bei einer solchen Fallgestaltung lässt sich mit dem wirksamen Element eine zeitliche oder geometrische Auswahl treffen, um dann in den Verstärker nur noch zum Zeitpunkt optimaler Verstärkung den Laserstrahl einzukoppeln bzw. nur den günstigsten Bereich des verstärkenden Mediums im Verstärker auszunutzen. In diesem Zusammenhang kann die Verwendung von mit unterschiedlichen Drücken, Temperaturen und Gasmischungen arbeitendem Laser-Oszillator und Laser-Verstärker sinnvoll sein, bei denen als weitere Möglichkeit der Pumpvorgang zeitlich wählbar und voneinander unabhängig durchführbar gestaltet sein kann.

Hierbei ist es zweckmässig, wenn an den Gehäusestirnseiten des ersten Kanals Brewster-Fenster und/oder ein totalreflektierendes und ein zumindest teildurchlässiges optisches Element und an den Gehäusestirnseiten des mit ihm in Reihe geschalteten weiteren Kanals je ein Brewster-Fenster vorgesehen ist.

Eine andere Weiterbildung der Erfindung sieht vor, dass die beiden Gehäusestirnseiten selbst als total und/oder (teil-) reflektierende Trägerplatten ausgebildet sind, wobei die Trägerplatten aus Quarz, Glas, (Glas-) Keramik, Germanium, Cadmiumtellurid oder Zinkselenid bestehen können. Eine solche Koppelung von Spiegeln unterliegt nur in geringer Weise Temperatureinflüssen und kennt keine gegenseitigen Justageprobleme. Dabei ist es zweckmässig, dass zumindest je ein totalreflektierender Bereich und ein ausreichend durchlässiger Bereich an der dem Resonator zugekehrten Seite der Trägerplatte vorgesehen oder in der Trägerplatte eingearbeitet ist, die bedarfsweise durch Begrenzung des reflektierenden Bereichs als Modenblende ausgebildet ist. In diesem Fall ergibt sich der Vorteil, dass man ein der Strahlenbegrenzung dienliches Element, das ansonsten erforderlich wäre, einspart. Total- oder Teiltransparenz setzen eine entsprechende Vergütung voraus: In der Praxis hat es sich als vorteilhaft erwiesen, den totalreflektierenden Bereich in Form einer z.B. aus einer metallischen Schicht (Gold) oder einer dielektrischen Schicht bestehenden Reflexschicht aufzudampfen und für den durchlässigen Bereich transparentes Material zu wählen oder aber letzteres wenigstens teilweise durch ein durchgehendes Loch zu ersetzen. Eine solche mit starr zueinander justierten optischen Flächen bestückte Platte ist auch für andere Laser, wie Festkörper-, gepulste Gas-, Dauerstrichlaser usw. verwertbar, so dass hierfür Elementenschutz begehrt wird.

Was die strahlenumlenkenden Elemente anbetrifft, so können dieselben, sofern sie auf derselben Stirnseite liegen, durch einen Prismenblock oder einen Tripelspiegel ersetzt werden. Im Fall des Tripelspiegels ist es von Vorteil, wenn er stirnseitig mit dem Strahlengang ausgesetzten flächigen Bereichen und aus dem Strahlengang herausgehaltenen Kanten angeordnet ist.

Um eine inhomogene Energieverteilung im Strahl korrigieren bzw. homogen machen zu können, sind die optischen Elemente austauschbar und weisen eine von der planen Oberfläche abweichende und den jeweiligen Bedürfnissen entsprechend angepasste – z.B. zylindrische oder asphärische – Formgebung auf. Die optischen Flächen lassen sich in der Regel nicht vonvornherein angeben, sondern jede einzelne kann gezielt ausgewählt sowie in dem System erprobt und festgelegt werden. Die Anwendung ist z.B. bei einem Laser vorstellbar, bei dem ein Teilstrahl ausgekoppelt und auf seine optische Qualität, d.h. im wesentlichen auf seine homogene Intensitätsverteilung hin, überprüft sowie mittels adaptiven optischen Elementen ausgeregelt wird. Dieser Vorgang lässt sich auch automatisieren. Eine bevorzugte Ausführungsform ist hierbei, das die Pulsform beeinflussende Element im ausgekoppelten, die beiden Kanäle verbindenden Bereich anzuordnen, so dass die Strahlaufbereitung noch vor Durchlauf des zweiten Kanals erfolgt.

Zweckmässigerweise besteht das die Pulsformung zeitlich beeinflussende Element aus einem aktiv wirkenden optischen Schalter (Q-switch) oder einem passiven Güteschalter. Für den aktiven Fall bietet sich ein elektro- optischer Kristall – z.B. aus Cadmium-Telurid – oder ein akustooptischer Kristall und für den passiven ein sättigbarer Absorber – z.B. aus Ge oder $SF_6$ oder heissem $CO_2$ – an. Selbstverständlich ist auch die Verwendung anderer, im einzelnen nicht weiter aufgezählte aktiver und passiver Güteschalter vorstellbar, ohne dass dadurch der Rahmen der Erfindung verlassen würde.

Ein anderer Vorteil der Erfindung ist darin zu sehen, dass für die geometrische Pulsformung ein den Laserimpuls aufweitendes, fokussierendes, drehendes oder polarisierendes Element innerhalb oder ausserhalb des Gesamtgehäuses oder auch eine adaptive Optik zum Verändern der Phasenflächen Verwendung finden kann.

Im folgenden werden an Hand einer Zeichnung Ausführungsbeispiele der Erfindung näher erläutert, wobei die in den einzelnen Figuren einander entsprechenden Teile dieselben Bezugszahlen aufweisen. Es zeigt:

Fig. 1 eine erfindungsgemässe Anordnung, bei der das reflektierende und das zumindest teildurchlässige optische Element des Oszillators in den Stirnseiten des Gehäuses eingelassen sind,

Fig. 2 eine Anordnung gemäss Fig. 1, bei der das reflektierende und das zumindest teildurchlässige Fenster ausserhalb des Gehäuses angeordnet sind.

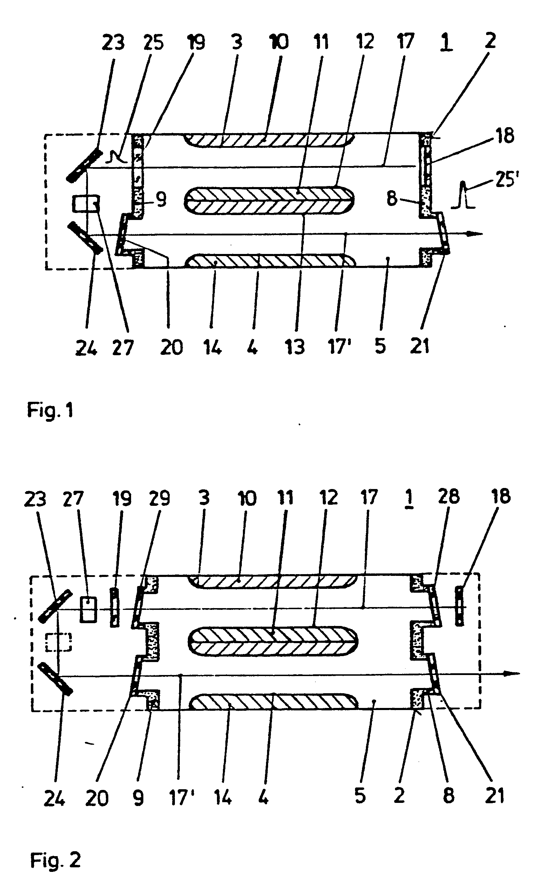

Die Grundanordnung gemäss Fig. 1 zeigt den Laser 1, dessen Gehäuse 2 den Resonator- oder Entladungsraum 5 umgibt, in dem das Elektrodensystem 10 bis 14 angeordnet ist. Die beiden Stirnwände 8 und 9 des Gehäuses dienen im wesentlichen der Halterung der Spiegel 18 bis 21. Das Gehäuse 2 kann dabei in Längsachsenrichtung – gemäss der ausgezogenen Linienführung – von den beiden Stirnwänden 8 und 9 begrenzt sein. In diesem Fall wird der Laserstrahl in seinem Faltungsbereich, der gleichzeitig auch der Umformung dient, extern geführt. Die gestrichelte Linienführung dagegen deutet an, dass auch dieser Bereich in das Gehäuseinnere mit einbezogen werden kann. Das mit einer nach aussen führenden Spannungszuführung versehene Elektrodensystem 10 bis 14 besteht aus der in der Längsachse des Gehäuses 2 angeordneten Mittelelektrode 11, die an ihrer Aussenkontur zwei in entgegengesetzte Richtungen weisende Entladungsflächen 12 und 13 besitzt, die jeweils mit einer ihr im Bereich der inneren Längswand des Gehäuses gegenüberliegenden Elektrode 10 und 14 bzw. deren Entladungsflächen 3 und 4 zusammenwirken.

In Höhe der Freiräume zwischen den Elektroden 10 und 11 ist hier an der Innenseite der Stirnwand 8 das totalreflektierende Element, das z.B. ein Spiegel sein kann, befestigt oder eingelassen, während in der Stirnwand 9 das zumindest teildurchlässige optische Element 19, z.B. ebenfalls ein entsprechend ausgebildeter Spiegel, die Wand ersetzt bzw. an dieser Stelle für die Laserstrahlung durchlässig ist. Zwischen den Elektroden 11 und 14 ist in den Stirnwänden 8 und 9 ein Brewster-Fenster 20 bzw. 21 eingelassen.

Hinsichtlich der Funktion vorstehender Anordnung gilt, dass der Laserstrahl 17 an dem Spiegel 18 100%ig reflektiert wird, den von den Elektroden 10 und 11 gebildeten Entladungskanal – z.B. einen Laser-Oszillator – durchläuft, an dem ihm gegenüberliegenden ausgekoppelt und anschliessend über den unter 45° zum Strahlengang angeordneten Spiegel 23 um 90° in das die Pulsformung zeitlich oder geometrisch beeinflussende Element 27 gelenkt wird. Diese Lage von Element 27 ist die bevorzugte Ausführungsform. Grundsätzlich kann es jedoch im gesamten Bereich des Strahlengangs angeordnet werden.

Für den Fall, dass ein die Pulsform zeitlich beeinflussendes Element 27 benötigt wird, was in der Fachsprache auch als mode-locking bezeichnet wird, kann ein aktiv oder passiv wirkender optischer Güteschalter, ein sogenannter Q-switch, vorgesehen sein. Der aktive Schalter kann dabei als wirksames Teil einen elektrooptischen Kristall aus CdTe oder einen akustooptischen Kristall und der passive Schalter einen sättigbaren Absorber aus Ge, $SF_6$ oder heissem $CO_2$ besitzen. In letzterem Fall hat der Kristall selbst die Eigenschaft durch Sättigungsabsorption als optischer Schalter zu wirken, während in ersterem diese Eigenschaft durch optisches Triggern bewirkt wird. Man kann hierbei z.B. mit einer Laserfunkenstrecke die Triggerung des elektrooptischen Schalters durchführen, um dadurch die Transmission zu ändern. Wenn dagegen ein die Pulsform geometrisch beeinflussendes Element 27 benötigt wird, bedeutet dies, dass der Laserpuls aufgeweitet oder von einer schmalen in eine breitere Form übergeführt werden soll. Auch eine Drehung oder Polarisierung oder – mittels adaptiver Optiken – ein Verändern der Phasenflächen des Laserstrahls ist durchführbar. Dabei können die umlenkenden Elemente als adaptive Spiegel ausgebildet sein.

Nach Verlassen des Elements 27 wird der in der vorbeschriebenen Weise geformte Laserstrahl über den ebenfalls unter 45° zum Strahlengang angeordneten Spiegel 24 nochmals um 90° – in die zur Ausgangsrichtung entgegengesetzte Richtung – umgelenkt und gelangt anschliessend über das in der Stirnwand 9 eingelassene Brewster-Fenster 20 in den von den Elektroden 11 und 14 gebildeten Kanal, der im vorliegenden Ausführungsbeispiel als Verstärker wirkt. Von hier wird der Laserstrahl 17' sodann durch das in der gegenüberliegenden Stirnwand 8 eingelassene Brewster-Fenster 21 in Pfeilrichtung ausgekoppelt.

Figur 2 unterscheidet sich von Fig. 1 im wesentlichen nur dadurch, dass in den Seitenwänden 8 und 9 die optischen Elemente 18 und 19 durch die Brewster-Fenster 28 und 29 ersetzt sind. Die optischen Elemente 18 und 19 sind bei diesem Ausführungsbeispiel ausserhalb des Gehäuses 2 – jeweils unmittelbar neben dem zugehörigen Brewster-Fenster 28 bzw. 29 – angeordnet.

Durch zwei jeweils optisch abgeschlossene hintereinandergeschaltete Kanäle und den dazwischen gekoppelten Schalter 27 wird in einfacher Weise die Möglichkeit geschaffen, den Laserstrahl der Impulsform 25 (extern) zu beeinflussen, indem eine zeitliche oder geometrische Umformung vorgenommen wird. Im Verstärkerkanal wird dann nur noch derjenige Laser-Anteil verstärkt, der das Verstärkermedium optimal ausnutzt, so dass am Ausgang schliesslich die Impulsform 25′ anliegt, deren Anstieg wesentlich steiler ist als der ursprünglich vom Oszillatorkanal erzeugte Laserimpuls.

**Patentansprüche**

1. Laseranordnung, bestehend aus einem von einem Gehäuse (2) umgebenen Resonatorraum (5) mit einem Elektrodensystem, das in eine Mittelelektrode (11) mit zwei der elektrischen Entladung dienenden Oberflächen (12; 13) und zwei diesen Flächen gegenüberliegenden Aussenelektroden aufgegliedert ist, wobei durch die Elektrodenanordnung zwei Resonatorachsen definiert werden und wobei vier optische Elemente (18–21) vorgesehen sind, von denen wenigstens eines teildurchlässig ist, die an den Gehäusestirnseiten (8; 9) in Höhe der Freiräume zwischen den Elektroden den Laserstrahl in Richtung auf die jeweils andere Resonatorachse umlenken und dadurch die von den beiden Elektrodenpaaren (10, 11 bzw. 11, 14) gebildeten Kanäle optisch in Reihe schalten oder den Laserstrahl auskoppeln, wobei die umlenkenden optischen Elemente unter einem Winkel zum Strahlenverlauf angeordnet sind, dadurch gekennzeichnet, dass die Reihenschaltung der von den Elektrodenpaaren (10, 11 bzw. 11, 14) gebildeten Kanäle über den aus dem einen Kanal (10, 11) ausgekoppelten und in den anderen Kanal (11, 14) eingekoppelten Laserstrahl (17 bzw. 17′) erfolgt und zwischen den genannten Kanälen mindestens ein die Pulsformung zeitlich oder geometrisch beeinflussendes Element (27) geschaltet ist.

2. Laseranordnung nach Anspruch 1, dadurch gekennzeichnet, dass der erste Kanal einen optisch abgeschlossenen Laser-Oszillator mit einem instabilen Resonator aufweist und der mit ihm in Reihe geschaltete weitere Kanal einen Laser-Verstärker mit einem Injektionslaser darstellt.

3. Laseranordnung nach Anspruch 1 oder 2, gekennzeichnet durch die Verwendung von mit unterschiedlichen Drücken, Temperaturen und Gasmischungen arbeitendem Laser-Oszillator und Laser-Verstärker, deren Pumpvorgang zeitlich wählbar und voneinander unabhängig durchführbar ist.

4. Laseranordnung nach einem der vorausgehenden Ansprüche, dadurch gekennzeichnet, dass an den Gehäusestirnseiten (8; 9) des ersten Kanals Brewster-Fenster und/oder ein totalreflektierendes und ein zumindest teildurchlässiges optisches Element (18 bzw. 19) und an den Gehäusestirnseiten des mit ihm in Reihe geschalteten weiteren Kanals je ein Brewster-Fenster (20; 21) vorgesehen ist.

5. Laseranordnung nach Anspruch 4, dadurch gekennzeichnet, dass die beiden Gehäusestirnseiten (8; 9) selbst als total und/oder (teil-) reflektierende Trägerplatten ausgebildet sind und aus Quarz, Glas, (Glas-) Keramik, Kunststoff, Germanium, Cadmiumtellurid oder Zinkselenid bestehen.

6. Laseranordnung nach Anspruch 1 oder einem der folgenden Ansprüche, dadurch gekennzeichnet, dass die optischen Elemente (18 bis 21) austauschbar angeordnet sind und eine von der planen Oberfläche den jeweiligen Bedürfnissen entsprechend abweichende – z.B. zylindrische oder asphärische – Formgebung aufweisen.

7. Laseranordnung nach Anspruch 1, dadurch gekennzeichnet, dass das die Pulsform beeinflussende Element (27) im ausgekoppelten, die beiden Kanäle (10, 11 und 11, 14) verbindenden Bereich angeordnet ist.

8. Laseranordnung nach Anspruch 1 oder 10, dadurch gekennzeichnet, dass das die Pulsformung zeitlich beeinflussende Element (27) aus einem aktiv wirkenden optischen Schalter (Q-switch) – z.B. einem elektrooptischen Kristall aus Cadmium-Tellurid oder einem akustooptischen Kristall – oder einem passiven Güteschalter – z.B. einem sättigbaren Abasorber aus Ge oder $SF_6$ oder heissem $CO_2$ – besteht.

9. Laseranordnung nach einem der vorausgehenden Ansprüche 1 bis 11, dadurch gekennzeichnet, dass zum Verändern der Phasenflächen adaptive Optiken und für die geometrische Pulsformung ein den Laserimpuls aufweitendes, fokussierendes, drehendes oder polarisierendes Element (27) innerhalb oder ausserhalb des Gesamtgehäuses (2) Verwendung findet.

**Claims**

1. Laser arrangement comprising a resonator chamber (5) surrounded by a housing (2) and having an electrode system comprising a central electrode (11) with two surfaces (12; 13) for electric discharge and two outer electrodes situated opposite these surfaces, wherein the electrode arrangement defines two resonator axes, and wherein four optical elements (18–21) are provided, at least one fo which elements is partially transmissible, the optical elements deflecting the laser beam towards the other resonator axis at the housing end faces (8; 9) at the level of the spaces between the electrodes and thereby optically connecting in series the channels formed by the two electrode pairs (10, 11 and 11, 14) or outputting the laser beam, the said deflecting optical elements being arranged at an angle to the path of the beam, characterised in that the connection in series of the channels formed by the electrode pairs (10, 11 and 11, 14) is effected by means of the laser beam (17 and 17′) which is outputted from one channel (10, 11) and fed into the other channel (11, 14), and in that at least one element (27) which influences the pulse formation as to time or geometrically is connected between the said channels.

2. Laser arrangement according to claim 1, characterised in that the first channel has an optically closed laser oscillator with an unstable resonator and the other channel connected in series with the first constitutes a laser amplifier with an injection laser.

3. Laser arrangement according to claim 1 or 2, characterised by the use of a laser amplifier and laser oscillator operating with differing pressures, temperatures and gas mixtures and the pumping process of which can be selected as to time and carried out independently of one another.

4. Laser arrangement according to one of the preceding claims, characterised in that Brewster windows and/or a totally reflecting and an at least partially transmissible optical element (18 and 19, respectively) are provided at the housing end faces (8; 9) of the first channel and a Brewster window (20; 21) is provided at each of the housing end faces of the channel connected in series with the first channel.

5. Laser arrangement according to claim 4, characterised in that the two housing end faces (8; 9) are themselves totally and/or partially reflecting carrier plates and consist of quartz, glass, (glass-) ceramics, synthetic resin, germanium, cadmium telluride or zinc selenide.

6. Laser arrangement according to claim 1 or one of the following claims, characterised in that the optical elements (18 to 21) are exchangeable and have a shape differing from that of a plane surface according to the individual requirements, e.g. cylindrical or aspherical.

7. Laser arrangement according to claim 1, characterised in that the element (27) which influences the pulse form is arranged in the uncoupled region connecting the channels (10, 11 and 11, 14).

8. Laser arrangement according to claim 1 or 10, characterised in that the element (27) which influences the pulse form as to time consists of an actively functioning optical switch (Q switch), e.g. an electrooptical crystal of cadmium telluride, or of an acoustooptical crystal, or it consists of a passive Q switch, e.g. a saturable absorber consisting of Ge or $SF_6$ or hot $CO_2$.

9. Laser arrangement according to one of the preceding claims 1 to 8, characterised in that adaptive optical systems are used for altering the phase surfaces and an element (27) spreading out, focusing, rotating or polarizing the laser impulse for the geometrical pulse formation is used inside or outside the whole housing.

**Revendications**

1. Dispositif à laser comportant une cavité de résonateur (5) entourée par un boîtier (2) avec un système d'électrodes constitué par une électrode médiane (11) avec deux surfaces (12, 13) servant à la décharge électrique et deux électrodes extérieures opposées à ces surfaces, la disposition des électrodes définissant deux axes de résonateur et quatre éléments optiques (18–21) étant prévus dont au moins un est partiellement transparent, qui dévient le rayon laser sur les faces frontales (8, 9) du boîtier à la hauteur des espaces libres entre les électrodes, en direction de l'autre axe de résonateur et qui ainsi mettent optiquement en série les canaux formés par les deux paires d'électrodes (10, 11 et 11, 14) ou déclenchent le rayon laser, les éléments optiques de déviation étant disposés de manière à former un angle avec le parcours du rayon laser, caractérisé en ce que le montage en série des canaux formés par les paires d'électrodes (10, 11 et 11, 14) s'effectue par le rayon laser (17 ou 17′) sorti d'un canal (10, 11) et entré dans l'autre canal (11, 14) et en ce qu'un élément (27) au moins, influençant temporellement ou géométriquement la conformation des impulsions, est monté entre les canaux cités.

2. Dispositif à laser selon la revendication 1, caractérisé en ce que le premier canal présente un oscillateur à laser optiquement isolé avec un résonateur instable et en ce que l'autre canal monté en série avec le premier constitue un amplificateur à laser avec un laser à injection.

3. Dispositif à laser selon la revendication 1 ou 2, caractérisé par l'utilisation d'un oscillateur à laser et d'un amplificateur à laser fonctionnant à des pressions, des températures et avec des mélanges de gaz différents, dont le pompage peut être sélectionné dans le temps et effectué indépendamment l'un de l'autre.

4. Dispositif à laser selon l'une des revendications 1 à 3, caractérisé en ce qu'il est prévu sur les faces frontales (8, 9) du boîtier du premier canal, des fenêtres de Brewster et/ou un élément optique (18) totalement réfléchissant et un élément optique (19) au moins partiellement transparent ainsi que sur chacune des faces frontales du boîtier de l'autre canal monté en série avec le premier, une fenêtre de Brewster (20; 21).

5. Dispositif à laser selon la revendication 4, caractérisé en ce que les deux faces frontales (8, 9) du boîtier sont elles mêmes des plaques support totalement réfléchissantes et/ou (partiellement) réfléchissantes et sont en quartz, verre, céramique (de verre), matière plastique, germanium, tellurure de cadmium ou séléniure de zinc.

6. Dispositif à laser selon la revendication 1 ou l'une des revendications 2 à 5, caractérisé en ce que les éléments optiques (18 à 21) sont disposés de manière interchangeable et ont une forme différant de la surface plane, selon les besoins, par exemple une surface cylindrique ou non sphérique.

7. Dispositif à laser selon la revendication 1, caractérisé en ce que l'élément (27) influençant la forme des impulsions est disposé dans la zone de sortie, reliant les deux canaux (10, 11) et (11, 14).

8. Dispositif à laser selon la revendication 1 ou 7, caractérisé en ce que l'élément (27) influençant la forme des impulsions est un déclencheur optique (interrupteur-optique) agissant activement — par exemple un cristal électro-optique en tellure de cadmium ou un cristal optoacoustique – ou un déclencheur passif – par exemple un absorbeur saturable en Ge ou $SF_6$ ou en $CO_2$ chaud.

9. Dispositif à laser selon l'une des revendications 1 à 8, caractérisé en ce que l'on utilise des éléments optiques adaptatifs pour faire varier les surfaces de phase et un élément (27) élargissant, concentrant, tournant ou polarisant l'impulsion laser pour la conformation géométrique des impulsions, à l'intérieur ou à l'extértieur de l'ensemble du boîtier (2).

Fig. 1

Fig. 2